# EUROPEAN PATENT SPECIFICATION

(11) **EP 3 957 888 B1**
(45) Date of publication and mention of the grant of the patent: **09.10.2024**
(21) Application number: 20791212.2
(22) Date of filing: 02.04.2020
(51) Int. Cl.: F16K 31/06, F16K 27/02, F25B 41/31, F25B 41/34

(54) **ELECTROMAGNETIC-VALVE-INTEGRATED EXPANSION VALVE**
EXPANSIONSVENTIL MIT INTEGRIERTEM ELEKTROMAGNETISCHEM VENTIL
DÉTENDEUR INTÉGRÉ À UNE ÉLECTROVANNE

(30) Priority: 17.04.2019 JP 2019078362
(43) Date of publication of application: 23.02.2022
(73) Proprietor: Fujikoki Corporation, Tokyo 158-0082 (JP)
(72) Inventor: AMAIKE, Shotaro, Tokyo 158-0082 (JP)
(74) Representative: Ter Meer Steinmeister & Partner
(86) International application number: PCT/JP2020/015210
(87) International publication number: WO 2020/213420

(56) References cited:
- EP-A1- 3 249 322
- JP-A- 2003 065 633
- JP-A- 2003 065 633
- JP-A- 2005 121 046
- JP-A- H06 241 340
- JP-A- H08 277 952
- JP-U- S62 110 672

## Description

### [Technical Field]

The present invention relates to an electromagnetic valve integrated expansion valve.

### [BACKGROUND OF THE INVENTION]

Conventionally, as an electromagnetic valve integrated expansion valve used in refrigerant circulation systems, the one described in Patent Document 1 below is known. This electromagnetic valve integrated expansion valve includes a valve seat disposed between a valve chamber and an outlet refrigerant flow path, a valve element that approaches or separates from the valve seat, a valve element actuation mechanism for displacing the valve element (a power element), a bypass path that connects the valve chamber and the outlet refrigerant flow path, and an electromagnetic valve for opening and closing the bypass path.

According to such an electromagnetic valve integrated expansion valve, by opening the bypass path when the electromagnetic valve is opened, the balance of the force applied to the valve element is lost, and it is possible to separate the valve element from the valve seat. On the other hand, by closing the bypass path when the electromagnetic valve is closed, the balance of the force applied to the valve element is restored, and it is possible to drive the valve element using a diaphragm actuation mechanism.

JP 2003 065633 A discloses a solenoid valve integrated expansion valve suitable for use in, for example, a vehicle air conditioner having a refrigeration cycle on the front and rear sides of a vehicle interior. JP 2003 065633 A discloses an electromagnetic valve integrated expansion valve according to the preamble of claim 1.

Similar integrated expansion valve constructions are disclosed in EP 3 249 322 A1, JP 2005 121046 A, JP H06 241340 A, JP H08 277952 A and JP S62 110672 U.

### [Citation List]

### [Patent Documents]

[Patent Document 1] Japanese Unexamined Patent Application Publication No. 2006-214722.

### [Summary of Invention]

### [Technical Problem]

An electromagnetic valve is provided with a cord for receiving power from a control device of a refrigerant circulation system or the like, and a connector (referred to as a valve-side connector) is connected to this cord. When attaching an electromagnetic valve integrated expansion valve to the refrigerant circulation system, by fitting such a connector to a mating connector, electrical conduction is realized between the control device and the electromagnetic valve.

Here, refrigerant circulation systems equipped with electromagnetic valve integrated expansion valves have various forms, and the position and orientation of the mating connector are various. Accordingly, conventionally, the valve-side connector is not fixed to the electromagnetic valve integrated expansion valve, but is oriented in any direction in accordance with the mating connector.

For this reason, since the valve-side connector hangs from the cord due to its own weight, the operator who attaches the electromagnetic valve integrated expansion valve to the refrigerant circulation system needs to grip the valve-side connector with one hand to adjust the orientation and fit it to the mating connector gripped with the other hand, which causes a problem of poor workability.

Accordingly, an object of the present invention is to provide an electromagnetic valve integrated expansion valve having excellent workability.

### [Means for Solving the Problems]

An electromagnetic valve integrated expansion valve according to the present invention is defined in claim 1. It includes: a valve main body having a valve chamber; a valve element that restricts passage of a fluid by being seated on a valve seat and allowing passage of the fluid by separating from the valve seat; a coil spring that biases the valve element toward the valve seat; an operation rod that contacts the valve element at one end; a power element that is attached to the valve main body and drives the operation rod; and an electromagnetic valve that opens or closes a principal valve opening that is provided between the valve chamber and an outflow side passage, wherein: the electromagnetic valve includes a case that is fixed to the valve main body, an electromagnetic valve element that separates from or approaches the principal valve opening, a coil that drives the electromagnetic valve element, and a connector connected to a cord that supplies power to the coil, and the connector is supported by a bracket that extends from the case.

### [Advantageous Effects of Invention]

According to the present invention, it is possible to provide an electromagnetic valve integrated expansion valve having excellent workability.

### [Brief Description of Drawings]

[Figure 1] FIG. 1 is a perspective view of an electromagnetic valve integrated expansion valve according to a first embodiment not representing the present invention.
[Figure 2] FIG. 2 is a top view of an electromagnetic valve integrated expansion valve.
[Figure 3] FIG. 3 is a front view of an electromagnetic valve integrated expansion valve.
[Figure 4] FIG. 4 is a side view of an electromagnetic valve integrated expansion valve
[Figure 5] FIG. 5 is a cross-sectional view of a cross section taken along the line A-A of FIG. 4 with the bracket removed, as viewed from the side.
[Figure 6] FIG. 6 is a plan view of an intermediate product obtained in the manufacturing process of the bracket.
[Figure 7] FIG. 7 is a perspective view of an electromagnetic valve integrated expansion valve according to a second embodiment representing the present invention.
[Figure 8] FIG. 8 is a top view of an electromagnetic valve integrated expansion valve
[Figure 9] FIG. 9 is a front view of an electromagnetic valve integrated expansion valve
[Figure 10] FIG. 10 is a side view of an electromagnetic valve integrated expansion valve.

### [Description of Embodiment(s)]

Hereinafter, embodiments according to the present invention will be described with reference to the drawings.

### (Definition of Directions)

In the present specification, the direction from the valve element toward the operation rod is defined as an "upward direction," and the direction from the operation rod toward the valve element is defined as a "downward direction." Accordingly, in the present specification, the direction from the valve element toward the operation rod is referred to as an "upward direction," regardless of the posture of the expansion valve.

### (First Embodiment)

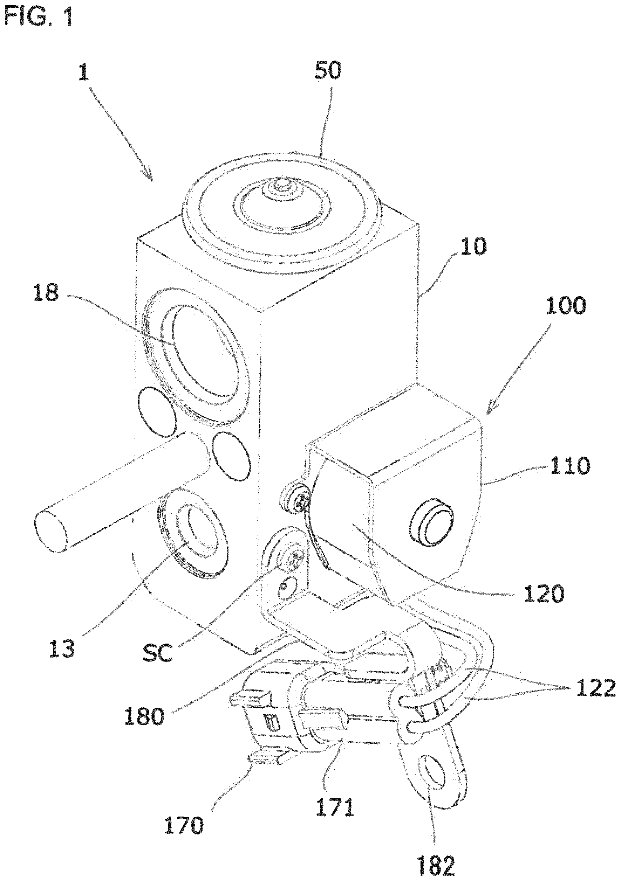

FIG. 1 is a perspective view of an electromagnetic valve integrated expansion valve 1 according to a first embodiment not representing the present invention,

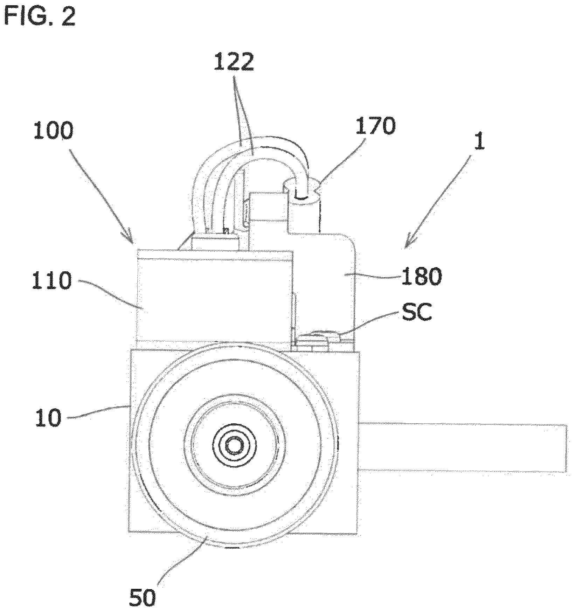

FIG. 2 is a top view of the electromagnetic valve integrated expansion valve 1,

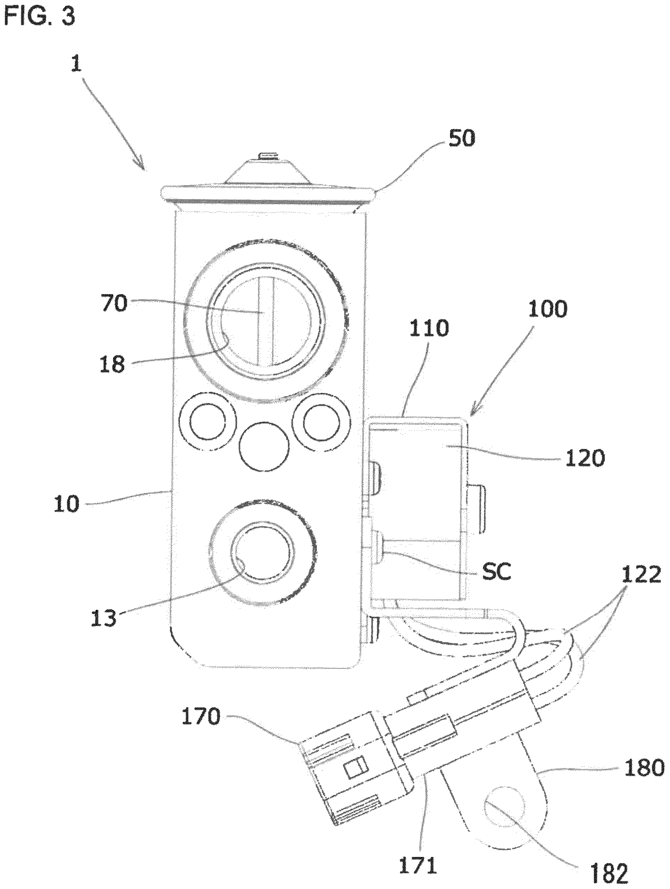

FIG. 3 is a front view of the electromagnetic valve integrated expansion valve 1,

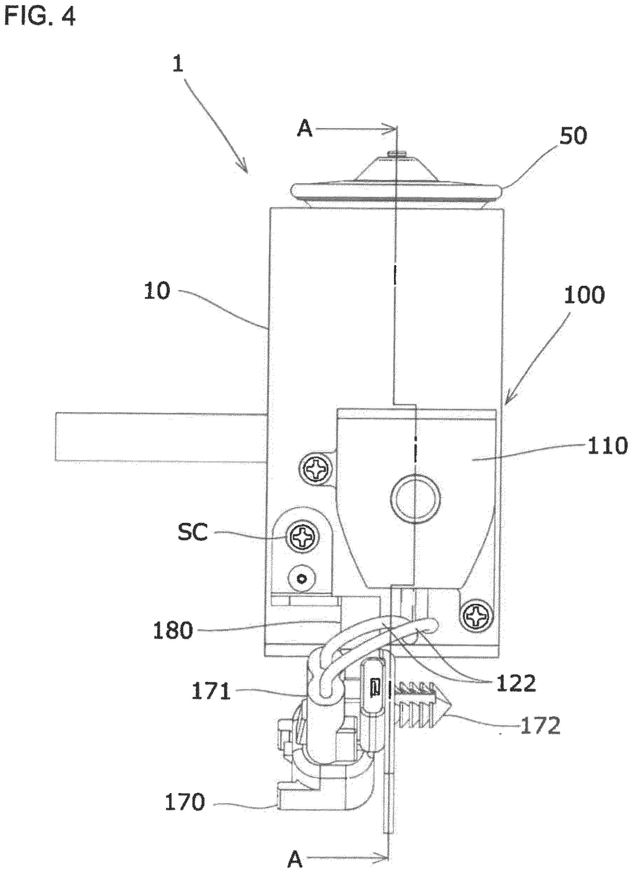

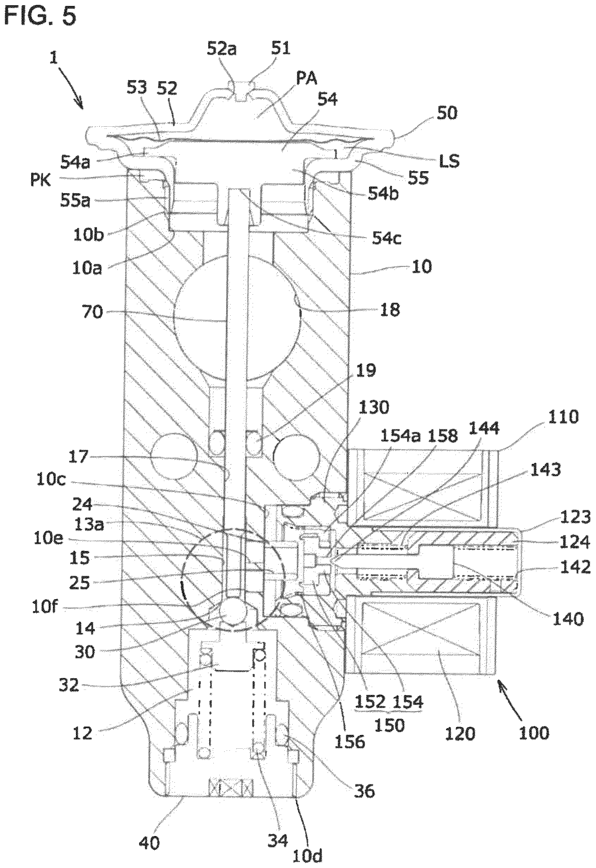

FIG. 4 is a side view of the electromagnetic valve integrated expansion valve 1, and FIG. 5 is a cross-sectional view of a cross section taken along the line A-A of FIG. 4 with the bracket removed, as viewed from the side.

### (Structure of the electromagnetic valve integrated expansion valve)

In FIG. 5, the electromagnetic valve integrated expansion valve 1 has a valve main body 10 having a substantially prismatic shape. An inlet refrigerant passage 13 for supplying high-pressure refrigerant from the compressor side of the refrigeration cycle is formed inside the lower portion of the valve main body 10, and the inlet refrigerant passage 13 communicates with a valve chamber 12 formed inside the valve main body 10. A ball-shaped valve element 30 is arranged in the valve chamber 12 and is supported by a coil spring 34 via a support member 32.

The upper end of the valve element 30 is in contact with the lower end of the operation rod 70. The operation rod 70 extends within the valve main body 10 through an orifice portion 15 connected to the valve seat 14, a sliding portion 17 for guiding the operation rod 70, and a return passage 18. A seal member 19 that comes into contact with the operation rod 70 and the valve main body 10 is provided between the sliding portion 17 and the return passage 18.

A nut member 40 is screwed into an opening portion 10d at the lower end of the valve chamber 12, and the opening portion 10d is sealed via an O-ring 36. By screwing in the nut member 40, the coil spring 34 is compressed, and the valve element 30 can be biased upward via the support member 32 with a predetermined elastic force. When the valve is opened, a refrigerant (fluid) in the valve chamber 12 passes between the valve element 30 and the valve seat 14 and flows out to the outlet refrigerant flow path 13a (illustrated by the dotted line in FIG. 5) formed on the side opposing the inlet refrigerant passage 13. The refrigerant from the outlet refrigerant flow path 13a is sent to an evaporator (not illustrated in the figure).

The refrigerant returned from the evaporator passes through the return passage 18 provided in the upper portion of the valve main body 10 and is returned to the compressor (not illustrated in the figure). The refrigerant temperature in the return passage 18 is transmitted to the pressure actuation chamber PA of the power element 50 attached to the upper portion of the valve main body 10.

The power element 50 provided at the upper end of the valve main body 10 has a plug 51, an upper lid member 52, a diaphragm 53, a stopper member 54, and a receiving member 55.

An opening portion 52a is formed at the top of the substantially conical upper lid member 52, and can be sealed by the plug 51.

The diaphragm 53 is made of a thin plate material in which a plurality of concentric uneven shapes are formed, and has an outer diameter that is substantially the same as the outer diameter of the upper lid member 52 and the receiving member 55.

The substantially cylindrical receiving member 55 having a conical upper portion has a male screw 55a on the outer circumference of the lower end thereof.

The stopper member 54 has a disk portion 54a and a cylindrical portion 54b coaxially joined to the lower surface of the disk portion 54a. A fitting hole 54c is formed in the center of the lower end of the cylindrical portion 54b.

The assembly procedure of the power element 50 will be described. In a state in which the outer circumferential portions of the upper lid member 52, the diaphragm 53, and the receiving member 55 are overlapped with each other, these outer circumferential portions are peripherally welded and integrated together using TIG welding, laser welding, plasma welding, or the like, for example.

Subsequently, a working gas is sealed in a space (referred to as the pressure actuation chamber PA) surrounded by the upper lid member 52 and the diaphragm 53 from the opening portion 52a formed in the upper lid member 52, and then the opening portion 52a is sealed with the plug 51, and the plug 51 is fixed to the upper lid member 52 by projection welding or the like.

At this time, since the diaphragm 53 receives pressure in a form in which it protrudes toward the receiving member 55 due to the working gas sealed in the pressure actuation chamber PA, it is supported in contact with the upper surface of the stopper member 54 that is arranged in the lower space LS surrounded by the diaphragm 53 and the receiving member 55. It should be noted that, since the disk portion 54a of the stopper member 54 is held by the inner surface of the receiving member 55, the stopper member 54 does not come out of the power element 50.

When the power element 50 assembled as described above is attached to the valve main body 10, the male screw 55a on the outer circumference of the lower end of the receiving member 55 is screwed into the female screw 10b formed on the inner circumference of the recess portion 10a of the valve main body 10. When the male screw 55a is screwed into the female screw 10b, the lower end of the receiving member 55 comes into contact with the upper end surface of the valve main body 10. As a result, the power element 50 can be fixed to the valve main body 10. In such a state, the lower space LS of the power element 50 communicates with the return flow path 18, that is, the same internal pressure is obtained.

At this time, a packing PK is interposed between the power element 50 and the valve main body 10 to prevent the refrigerant from leaking from the recess portion 10a when the power element 50 is attached to the valve main body 10.

In the electromagnetic valve integrated expansion valve 1, since the internal pressure of the pressure actuation chamber PA changes in accordance with the pressure and temperature of the refrigerant flowing out of the evaporator and passing through the return flow path 18, the diaphragm 53 changes shape and the operation rod 70 is driven as a result. The biasing force of the operation rod 70, the refrigerant pressure in the valve chamber 12, and the biasing force of the coil spring 34 are applied to the valve element 30, and the gap between the valve element 30 and the valve seat 14 is adjusted by the balance of these forces.

Specifically, when the heat load of the evaporator is large, the gap between the valve element 30 and the valve seat 14 becomes large, and a large amount of refrigerant is supplied to the evaporator. Conversely, when the heat load is small, the gap becomes small, and the flow rate of the refrigerant supplied to the evaporator is reduced.

### (Electromagnetic valve)

An electromagnetic valve 100 is attached to the side surface of the valve main body 10. The electromagnetic valve 100 has a case 110 that is screwed to the valve main body 10. A hollow suction element 130 is attached so as to extend into the case 110 from the bottomed opening portion 10c formed in the valve main body 10.

The opening portion 10c communicates with the valve chamber 12 in the valve main body 10 via a communication passage (not illustrated in the figure). Accordingly, the pressure in the opening portion 10c is substantially equal to the internal pressure in the valve chamber 12.

A cylindrical cover 123 connected to the suction element 130 is arranged in the center of the case 110, a cylindrical plunger 124 is slidably arranged inside the cover 123, and a valve shaft 140 is slidably inserted in the plunger 124. The spring 142 provided between the plunger 124 and the valve shaft 140 biases the valve shaft 140 in a direction such that the valve shaft 140 protrudes from the plunger 124. In addition, the spring 143 arranged between the suction element 130 and the plunger 124 is biased in a direction such that the plunger 124 separates from the suction element 130.

A pilot valve element 150 is arranged on the inner side of the suction element 130 screwed into and attached to the opening portion 10c. The pilot valve element 150 has an annular valve element 152 made of PTFE and a brass pilot valve main body 154 that includes the valve element 152. The pilot valve main body 154 has a bleed port 154a that penetrates in parallel with the valve element 152. The electromagnetic valve element is composed of the valve shaft 140 and the pilot valve element 150.

The pilot valve element 150 is held so as to be relatively displaceable along the axis with respect to the suction element 130, is biased toward the valve shaft 140 by the coil spring 156, and is in contact with the step portion on the inner circumference of the suction element 130. A pilot valve port 158 formed at the center of the valve element 152 faces the tapered tip 144 of the valve shaft 140 protruding from the plunger 124.

In the opening portion 10c, a conduit 24 is provided opposing the pilot valve element 150. The inner side of the conduit 24 constitutes a principal valve opening 25 connected to the introduction ports 10c and 10f that are connected to the outlet refrigerant flow path (the outflow side passage) 13.

As illustrated in FIG. 1 to 4, the case 110 is bent into a U shape by press-molding one plate material, and the coil 120 is arranged inside the case 110. The coil 120 is connected to one end of the two cords 122. The other end of the cords 122 are connected to the connector 170.

The connector 170 includes a resin tubular main body 171, a resin clip portion 172 for attaching to the bracket 180, and a metal terminal (not illustrated in the figure) connected to the cords 122 in the tubular main body 171. The clip portion 172 has a shape formed by joining a plurality of conical portions in series, and is continuously provided on the tubular main body portion 171.

### (Bracket)

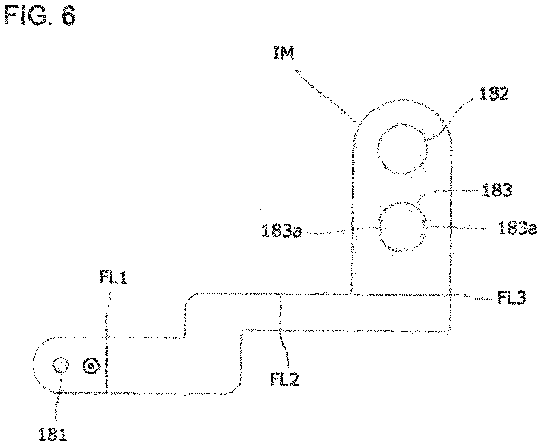

FIG. 6 is a plan view of an intermediate product obtained in the manufacturing process of the bracket 180. By punch processing one metal plate material, the substantially L-shaped intermediate product IM illustrated in FIG. 6 is formed. At the time of punch processing, a first hole 181 near one end of the intermediate product IM, and a second hole 182 and a third hole 183 near the other end may be formed at the same time. The first hole 181 and the second hole 182 are both circular, but the third hole 183 has two protruding portions 183a whose inner circumferences oppose each other.

The intermediate product IM is bent at a right angle around a first folding line FL1 near the first hole 181. In addition, the intermediate product IM is bent approximately 150 degrees around a second folding line FL2 in the middle (see FIG. 3). Further, the intermediate product IM is bent at a right angle at a third folding line FL3 near the third hole 183. In this way, the bracket 180 is formed. It should be noted that by bending the bracket twice or more, the orientation of the connector 170 can be set in any three-dimensional direction.

The connector 170 is attached to the bracket 180 by inserting the clip portion 172 into the third hole 183 of the bracket 180. When the clip portion 172 is inserted into the third hole 183, any number of the conical portions of the clip portion 172 elastically change shape such that they can pass through the protruding portion 183a of the third hole 183. However, when a force is applied in the direction of pulling out the clip portion 172 from the third hole 183, the protruding portion 183a engages with any number of the conical portions to prevent the clip portion 172 from being pulled out. It should be noted that the second hole 182 can be used to fix another component.

The bracket 180 can be attached to the valve main body 10 by screwing the screw SC inserted into the first hole 181 of the bracket 180 into the screw hole of the valve main body 10. By providing the screw hole for screwing the screw SC on the same surface as the screw hole for screwing the case 110 to the valve main body 10, machining is facilitated.

At this time, the connector 170 attached to the bracket 180 via the third hole 183 is arranged so as to face diagonally downward with respect to the valve main body 10 (see FIG. 3). By fitting together a mating connector (not illustrated in the figure) and the connector 170, it is possible to connect to an external control device via the cord 122 so that power can be supplied.

### (Electromagnetic valve operation)

The electromagnetic valve 100 can open or close the communication between the valve chamber 12 and the outlet refrigerant flow path 13a. When the electromagnetic valve 100 is energized, the coil 120 becomes excited, such that the plunger 124 approaches the suction element 130 against the biasing force of the spring 143. In addition, the valve shaft 140 held by the plunger 124 is also displaced toward the pilot valve element 150, and the pilot valve port 158 is closed by the tip 144 thereof.

As a result, the refrigerant in the opening portion 10c flows into the space between the valve shaft 140 and the pilot valve element 150 via the bleed port 154a, and the pressure in this space increases, such that the pilot valve element 150 is displaced toward the conduit 24 and closes the principal valve opening 25. By closing the principal valve opening 25, the communication between the valve chamber 12 and the outlet refrigerant flow path 13a is closed.

At this time, as described above, the valve element 30 is seated on or separated from the valve seat 14 as the operation rod 70 is displaced in response to the operation of the diaphragm 53.

On the other hand, when the excitation of the coil 120 is deenergized by interrupting the energization of the electromagnetic valve 100, the plunger 124 is separated from the suction element 130 by the biasing force of the spring 143. Then, since the valve shaft 140 held by the plunger 124 is also displaced in a direction away from the pilot valve element 150, the pilot valve port 158 that was closed by the tip 144 is opened.

As a result, more refrigerant than flows into the space between the valve shaft 140 and the pilot valve element 150 from the bleed port 154a flows out from the pilot valve port 158, such that the pressure in this space decreases, the pilot valve element 150 is separated from the conduit 24, and the principal valve opening 25 is opened. By opening the principal valve opening 25, the refrigerant in the valve chamber 12 flows toward the outlet refrigerant flow path 13a.

In this way, refrigerant having a controlled flow rate can be circulated even when the valve element 30 is seated on the valve seat 14.

According to the present embodiment, since the connector 170 is attached by using a bracket 180 that is three-dimensionally bent, the orientation of the connector 170 can be set to an optimal direction regardless of the posture of the valve main body 10. Accordingly, when attaching the electromagnetic valve integrated expansion valve 1 to the refrigerant circulation system, the connector 170 can be easily connected to the mating connector even if the operator does not hold the connector 170, and the ease of assembly is improved.

Further, by separating the case 110 and the bracket 180, a plate material having a thickness suitable for the clip portion 172 to be inserted into the third hole 183 can be selected to form the bracket 180. Accordingly, even in the case that the specifications of the clip portion 172 are changed, the original case 110 can be used in common. It should be noted that a screw hole may be formed in the case 110 and one end of the bracket 180 may be screwed therein.

### (Second Embodiment)

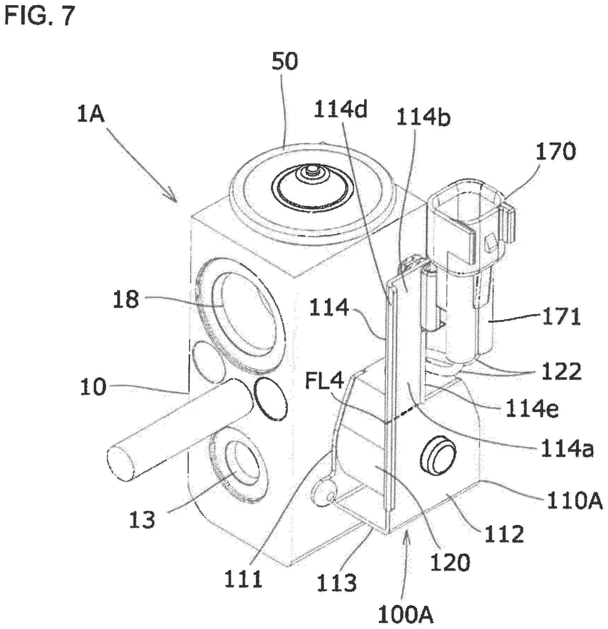

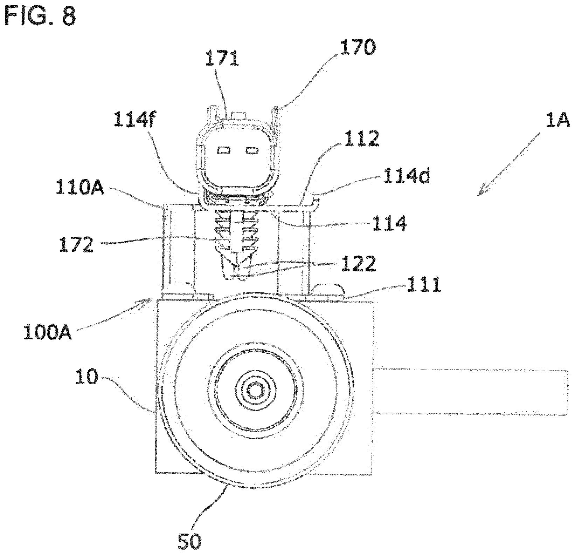

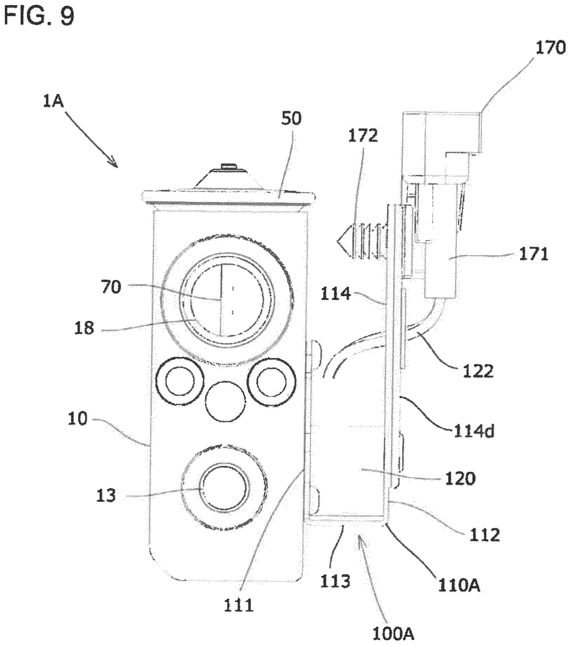

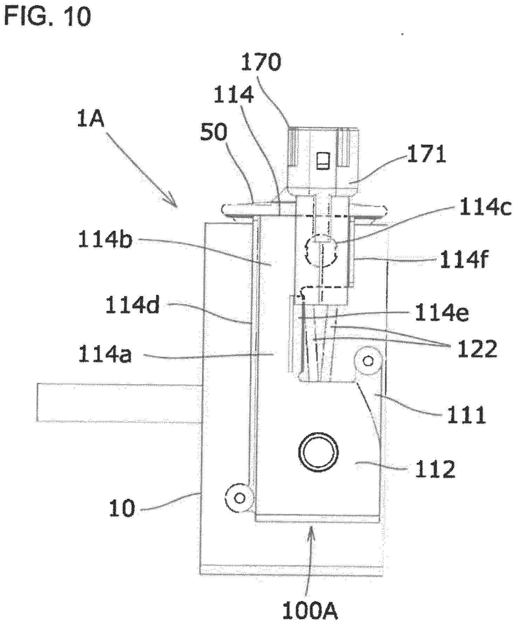

FIG. 7 is a perspective view of an electromagnetic valve integrated expansion valve 1A according to the second embodiment representing the present invention, FIG. 8 is a top view of the electromagnetic valve integrated expansion valve 1A, FIG. 9 is a front view of the electromagnetic valve integrated expansion valve 1A, and FIG. 10 is a side view of the electromagnetic valve integrated expansion valve 1A. Configurations similar to those of the above-described embodiments are denoted by the same reference numerals, and redundant descriptions thereof are omitted.

In the present embodiment, a portion of the electromagnetic valve case also serves as a connector bracket. More specifically, the case 110A of the electromagnetic valve 100A is formed by processing one metal plate material with press molding. The case 110A has a first plate portion 111 screwed to the valve main body 10, a second plate portion 112 parallel to the first plate portion 111, and a third plate portion 113 that connects the ends of the first plate 111 and the second plate 112.

A portion of the free end side of the second plate portion 112 is extended to form an extension portion 114. As illustrated in FIG. 10, the extension portion 114 constituting the bracket has a shape that is substantially L-shaped, and has a root portion 114a integrally formed with the second plate portion 112 and a widening portion 114b that is wider than the root portion 114a. At the center of the widening portion 114b, an attachment hole 114c having the same shape as the third hole 183 of the first embodiment is formed.

One side edge that is straight and continuous over the second plate portion 112, the root portion 114a, and the widening portion 114b is bent to form a common rib 114d. In addition, the other side edge of the root portion 114a is also bent to form a rib 114e, and the other side edge of the widening portion 114b is also bent to form a rib 114f. By forming the ribs 114d, 114e, 114f, the rigidity of the case 110A is increased, which is advantageous with respect to vibrations and the like.

The connector 170 is attached to the case 110A by inserting the clip portion 172 into the attachment hole 114c in the same manner as in the above-described embodiment.

According to the present embodiment, since the case 110A is also used as a mounting bracket for the connector 170, the number of parts is reduced. In addition, since the case 110A can be formed by press molding, the cost can be kept low even if the case 110 is also used as a mounting bracket.

Here, it is difficult to freely change the shape and dimensions of the first plate portion 111, the second plate portion 112, and the third plate portion 113 in order to hold a coil of a predetermined size. However, at the location of the folding line FL4 indicated by the dotted line in FIG. 7, for example, the root portion 114a can be bent with respect to the second plate portion 112, and as a result the connector 170 can be tilted to an arbitrary position around the folding line FL4. In addition to this, since the orientation of the connector 170 with respect to the attachment hole 114c (FIG. 10) can be freely changed, ease of assembly is ensured in the embodiment as well.

It should be noted that the present invention is not limited to the above-described embodiments. Within the scope of the present invention, as defined in the appended claims, modifications of any of the components of the above-described embodiments are possible. In addition, any component can be added or omitted in the above-described embodiments.

### [Reference Signs List]

1, 1A Electromagnetic valve integrated expansion valve
10 Valve main body
12 Valve chamber
13 Inlet refrigerant passage
13a Outlet refrigerant flow path
14 Valve seat
24 Conduit
30 Valve element
50 Power element
53 Diaphragm
70 Operation rod
100, 100A Electromagnetic valve
110, 110A Case
120 Coil
130 Suction element
140 Valve shaft
150 Pilot valve element
170 Connector
180 Bracket

## Claims

1. An electromagnetic valve integrated expansion valve (1A) comprising:
a valve main body (10) having a valve chamber (12);
a valve element (30) that restricts passage of a fluid by being seated on a valve seat (14) and allowing passage of the fluid by separating from the valve seat (14);
a coil spring (34) that biases the valve element (30) toward the valve seat (14);
an operation rod (70) that contacts the valve element (30) at one end;
a power element (50) that is attached to the valve main body (10) and drives the operation rod (70); and
an electromagnetic valve (100A) that opens or closes a principal valve opening (25) that is provided between the valve chamber (12) and an outflow side passage (13),
wherein:
the electromagnetic valve (100A) includes a case (110A) that is fixed to the valve main body (10), an electromagnetic valve element that separates from or approaches the principal valve opening (25), a coil (120) that drives the electromagnetic valve element, and a connector (170) connected to a cord (122) that supplies power to the coil (120), and
**characterized in that** the connector (170) is supported by a bracket (180) that extends from the case (110A),
the case (110A) is formed by bending one plate material, and the bracket (180) is a part of the plate material.

2. The electromagnetic valve integrated expansion valve (1A) according to claim 1, wherein the bracket (180) is bent with respect to the case (110A).

3. The electromagnetic valve integrated expansion valve (1A) according to any one of claims 1 to 2, wherein the bracket (180) has a bent edge in a width direction.

## Patentansprüche

1. Expansionsventil (1A) mit integriertem elektromagnetischen Ventil, umfassend:
einen Ventilhauptkörper (10) mit einer Ventilkammer (12);
ein Ventileelement (30), das den Durchfluss eines Fluids einschränkt, indem es auf einem Ventilsitz (14) sitzt, und den Durchfluss des Fluids ermöglicht, indem es sich von dem Ventilsitz (14) trennt;
eine Spiralfeder (34), die das Ventileelement (30) in Richtung des Ventilsitzes (14) vorspannt;
eine Betätigungsstange (70), die an einem Ende mit dem Ventileinsatz (30) in Kontakt steht;
ein Leistungselement (50), das am Ventilhauptkörper (10) befestigt ist und die Betätigungsstange (70) antreibt; und
ein elektromagnetisches Ventil (100), das eine Hauptventilöffnung (25) öffnet oder schließt, die zwischen der Ventilkammer (12) und einem Abflusskanal (13) angeordnet ist,
wobei:
das elektromagnetische Ventil (100A) ein Gehäuse (110A), das am Ventilhauptkörper (10) befestigt ist, ein elektromagnetisches Ventilelement, das sich von der Hauptventilöffnung (25) trennt oder sich ihr nähert, eine Spule (120), die das elektromagnetische Ventilelement antreibt; und einen Anschluss (170), der mit einem Kabel (122) verbunden ist, dass die Spule (120) mit Strom versorgt, umfasst, und
**dadurch gekennzeichnet, dass** der Anschluss (170) von einer Halterung (180) gestützt wird, die sich vom Gehäuse (110A) erstreckt,
und das Gehäuse (110A) durch Biegen eines Plattenmaterials gebildet ist und die Halterung (180) ein Teil des Plattenmaterials ist.

2. Expansionsventil (1A) mit integriertem elektromagnetischen Ventil nach Anspruch 1, wobei die Halterung (180) relativ zu dem Gehäuse (110A) gebogen ist.

3. Expansionsventil (1A) mit integriertem elektromagnetischen Ventil nach einem der Ansprüche 1 oder 2, wobei die Halterung (180) eine in Querrichtung gebogene Kante hat.

## Revendications

1. Soupape de détente intégrée dans une soupape électromagnétique (1A) comportant :
un corps principal de soupape (10) ayant une chambre de soupape (12) ;
un élément de soupape (30) qui restreint le passage d'un fluide en étant en appui sur un siège de soupape (14) et permettant le passage du fluide en se séparant du siège de soupape (14) ;
un ressort hélicoïdal (34) qui rappelle l'élément de soupape (30) vers le siège de soupape (14) ;
une tige de manoeuvre (70) qui est en contact avec l'élément de soupape (30) à une extrémité ;
un élément de puissance (50) qui est relié au corps principal de soupape (10) et entraîne la tige de manoeuvre (70) ; et
une soupape électromagnétique (100A) qui ouvre ou ferme une ouverture de soupape principale (25) qui est ménagée entre la chambre de soupape (12) et un passage côté écoulement de sortie (13),
dans laquelle :
la soupape électromagnétique (100A) inclut un boîtier (110A) qui est fixé au corps principal de soupape (10), un élément de soupape électromagnétique qui se sépare de l'ouverture de soupape principale (25) ou s'approche de celle-ci, une bobine (120) qui excite l'élément de soupape électromagnétique, et un connecteur (70) relié à un cordon (122) qui fournit de l'énergie à la bobine (120), et
**caractérisée en ce que** le connecteur (70) est supporté par un support (180) qui s'étend à partir du boîtier (110A),
le boîtier (110A) est formé en pliant un matériau en plaque, et le support (180) est une partie du matériau en plaque.

2. Soupape de détente intégrée dans une soupape électromagnétique (1A) selon la revendication 1, dans laquelle le support (180) est pliée par rapport au boîtier (110A).

3. Soupape de détente intégrée dans une soupape électromagnétique (1A) selon l'une quelconque des revendications 1 à 2, dans laquelle le support (180) a un bord plié dans une direction de largeur.
